# EUROPEAN PATENT SPECIFICATION

(11) **EP 1 878 190 B1**
(45) Date of publication and mention of the grant of the patent: **26.05.2010**
(21) Application number: 05745681.6
(22) Date of filing: 20.04.2005
(51) Int. Cl.: H04L 29/06

(54) **METHOD AND DEVICE OF ENABLING A USER OF AN INTERNET APPLICATION ACCESS TO PROTECTED INFORMATION**
VERFAHREN UND EINRICHTUNG ZUR ERMÖGLICHUNG DES ZUGRIFFS AUF GESCHÜTZTE INFORMATIONEN FÜR EINEN BENUTZER EINER INTERNET-ANWENDUNG
PROCEDE ET DISPOSITIF PERMETTANT A UN UTILISATEUR D'UNE APPLICATION INTERNET D'ACCEDER A DES INFORMATIONS PROTEGEES

(43) Date of publication of application: 16.01.2008
(73) Proprietor: Docaccount AB, 131 42 Nacka (SE)
(72) Inventor: THOURSIE, Anders, S-131 42 Nacka (SE); HOLM, Peter, S-191 35 Sollentuna (SE); OLSSON, Sven-Håkan, S-111 37 Stockholm (SE)
(74) Representative: Engdahl, Stefan
(86) International application number: PCT/SE2005/000567
(87) International publication number: WO 2006/112760

(56) References cited:
- US-A1- 2004 078 604
- US-B1- 6 360 254

## Description

### Technical field of the invention

The present invention relates to a method of enabling a user of an Internet application to access protected information. The invention further relates to a system of enabling a user of an Internet application to access protected information.

### Background art

Today, companies deliver a great amount of information to customers and other parties via the Internet. The information may comprise marketing information, or subscribed information in the form of newsletters. To an ever-increasing extent, companies also choose to deliver core business information over the Internet, such as invoices, account statements, insurance statements, salary statements, etc. For this type of information, there are strong requirements that:
- the information is sent confidentially, i.e. only the recipient should be allowed to access the information, and that
- the distribution of the information is sender controlled, i.e. the sender of the information should be able to alert the recipient when the information is available.

There are currently available solutions that meet these requirements. One example is to send information through e-mail and to use Public Key Infrastructure, PKI, involving encryption of the information with the public key of a recipient certificate. Such a solution may give a high level of protection. However, it is also costly and rather complicated, both from a sender and from a recipient point of view, e.g. since it requires all recipients to acquire certificates prior to receiving the information.

Another solution is to provide the recipient of the information with a user account and letting the users access information after login. However, it is often conceived as laborious if the logon mechanism should be used merely for the task of reading a message or a document. The logon procedure can be simplified by using a so-called general logon cookie, containing access information to the user account. Typically, a cookie is a file that is stored by a server at the client computer. The file generally contains information pertaining to the client computer or a user that operates the computer.

This use of a general logon cookie has the unwanted effect that anybody in access of the computer with the cookie can access the entire user account at any time. An intruder can then obtain confidential information and may even perform transactions, such as issuing an order, in the name of the user to whom the cookie belongs.

US 6360254 discloses a method of enabling a user of an Internet application access to protected information, said method comprising the steps of creating an information identifier token; associating said information identifier token with said protected information; delivering said information identifier token to said authenticated user via e-mail; receiving a request from a requesting user to access said protected information; and verifying that said request comprises an information identifier token, and that said requested protected information is associated with the information identifier token of the request, allowing the requesting user to access said protected information.

### Summary of the invention

An object of the invention is to alleviate the problems of prior art by providing a straightforward and user-friendly way of enabling a user to access protected information.

This object is accomplished by a method of enabling a user of an Internet application access to protected information in accordance with claim 1, and a device for enabling a user of an Internet application access to protected information in accordance with claim 21.

According to a first aspect of the present invention, a method is provided comprising the steps of creating a user identifier token after having authenticated a user by means of a logon mechanism of the Internet application, associating the user identifier token with the authenticated user and storing the user identifier token at an Internet client of the authenticated user, the user identifier token not giving access to said Internet application. Further, the protected information is associated with the authenticated user, an information identifier token is created, the information identifier token not giving access to the Internet application, neither by itself nor in combination with the user identifier token and the information identifier token is associated with the protected information. Moreover, the information identifier token is delivered to the authenticated user via e-mail. Finally, a request is received from a requesting user to access the protected information, which request comprises a user identifier token and an information identifier token, and it is verifying, by means of the associations, that the user identifier token of the request is associated with the authenticated user, that the authenticated user is associated with the requested protected information and that the requested protected information is associated with the information identifier token of the request, wherein the requesting user is allowed to access the protected information.

According to a second aspect of the present invention, a device is provided comprising means for creating a user identifier token after having authenticated the user by means of a logon mechanism of the Internet application, means for associating the user identifier token with the authenticated user and means for delivering the user identifier token to an Internet client of the authenticated user, the user identifier token not giving access to the Internet application. Further, the device comprises means for associating the protected information with the authenticated user, means for creating an information identifier token, the information identifier token not giving access to the Internet application, neither by itself nor in combination with the user identifier token. Moreover, the device comprises means for associating the information identifier token with the protected information, means for delivering the information identifier token to the authenticated user via e-mail and means for receiving a request from a requesting user to access the protected information. Finally, the device comprises means for verifying that said request comprises a user identifier token and an information identifier token, and that the user identifier token of the request is associated with the authenticated user, that the authenticated user is associated with the requested protected information and that the requested protected information is associated with the information identifier token of the request, allowing the requesting user to access the protected information.

A basic idea of the present invention is that a user identifier token is created, after a user has been authenticated by means of a logon mechanism of an Internet application. The user identifier token may for instance be created during a web session in which a user signs up for a service at the company with which the user is an employee, e.g. electronic delivery of monthly salary specification, via a login (involving a user name and a password) to the Internet application supplying the service, wherein the user is authenticated.

The user identifier token is then associated with the authenticated user and stored at an Internet client of the authenticated user. When protected information is to be made available for a requesting user, the concerned set of protected information is associated with the authenticated user and an information identifier token is created and associated with the protected information. The information identifier token is delivered to the authenticated user via e-mail. When a request is received from a requesting user, which not necessarily is the same user as the previously authenticated user, to access the protected information, it is verified that the request comprises a user identifier token and an information identifier token, that there exists an association between these tokens and the previously authenticated user and the protected information, respectively, and that the requested protected information is associated with the authenticated user. If so, the requesting user is allowed to access the protected information.

The user identifier token and the information identifier token are arranged in such a way that they do not give access to the user account of the Internet application, neither by themselves nor in combination.

The method thus provides the authenticated user with two different tokens at two different occasions. Each token is useless in itself and can only be successfully used in combination. For instance, when the monthly salary specification has been created, the information identifier token is delivered to the previously authenticated user via e-mail. A user which requests access to the salary specification needs to be in possession of both tokens to actually access the specification. Further, the information is protected in the sense that only a provider of the information has access to it, which has as an effect that the protected information cannot be accessed by an unauthorized third party. A precondition for receiving the user identifier token is that the user can be authenticated through using a logon mechanism to an Internet application.

The method provides a way of making the protected information available to the (authenticated) users in a user-friendly and convenient way, allowing them to access the information easily and often, without repeatedly having to use the existing logon mechanism. At the same time, the Internet application has a high level of protection. To access the application, users need to use the ordinary logon mechanism.

It should be noted that a secure channel may be set up for transmission of the information. In that case, the integrity of the transmitted information may be ensured. Possibly, cryptographic functions may also be employed to further provide for information integrity. A hash value may be created for the protected information and a requesting user is given access to this hash value on successful verification. Hence, the requesting user is able to check that the protected information has not been modified during transmittal. Further, the protected information may be provided with a digital signature, wherein non-repudiation is ensured. Moreover, the hash value may be encrypted, whereby confidentiality is provided to the hash value.

In an embodiment of the present invention, the information identifier token is a link to certain protected information, and when a requesting user activates the link, i.e. makes a request to access the protected information, the user identifier token stored at the client of the requesting user and the information identifier token is supplied to the provider of the protected information, either by actively sending the two tokens from the requesting user to the provider or having the provider access the two tokens at the user side. The information provider then verifies whether the requesting user may be given access to the protected information, as described in the above. Hence, determination is made whether the requesting user activating the link also is in possession of the particular user identifier token, which previously was delivered to the requested user in case he was authenticated to access the protected information. If a requesting user who is not in possession of the particular user identifier token (i.e. a requesting user not being authorized to access this specific protected information) activates the link, access will be denied.

Further features of, and advantages with, the present invention will become apparent when studying the appended claims and the following description. Those skilled in the art realize that different features of the present invention can be combined to create embodiments other than those described in the following.

### Brief description of the drawings

A detailed description of preferred embodiments of the present invention will be given with reference made to the accompanying drawing, in which:

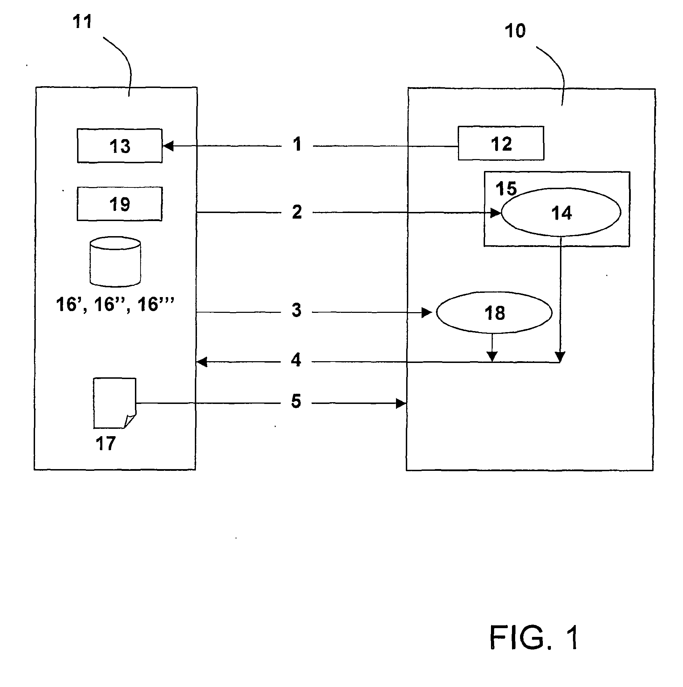

Fig. 1 illustrates a method and device of the present invention.

### Detailed description of preferred embodiments of the invention

Fig. 1 illustrates how a user 10 communicates with an information provider 11 in a preferred embodiment of the present invention. The user has via a logon mechanism 12 access to an Internet application 13. After using the logon mechanism 12 for authentication (step 1), a user identifier token 14 is created and stored (step 2) at an Internet client storage 15 of the user. An association 16' between the authenticated user and the user identifier token is created at the provider side.

When protected information 17 is to be made available to the authenticated user 10, the information provider 11 creates an information identifier token 18. The provider also creates an association 16" between the authenticated user 10 and the protected information 17, and an association 16''' between the protected information and the information identifier token 18. The information provider 11 then delivers (step 3) the information identifier token 18 to the user via e-mail.

Then, the information provider 11 receives (step 4) a request from a requesting user, which may or may not be the previously mentioned authenticated user 10, to access the protected information 17. The company then verifies that the request comprises a user identifier token and a document identifier token, that the user identifier token of the request is associated 16' with the previously authenticated user 10, that the information identifier token of the request is associated 16''' with the requested information, and that the requested information is associated 16" with the previously authenticated user. If so, there is enough evidence to regard the requesting user to be the previously authenticated user 10, and the requesting user hence gains (step 5) access to the protected information 17.

Note that the steps defined in the method of the present invention is typically performed by a computer 19 at the information provider 11, which computer executes appropriate software for performing these steps. The information provider 11 is typically remotely located from the user 10, which implies that a network, e.g. the Internet, is used to connect the provider 11 and the user 12.

An example of the environment in which the present invention may be applied is given in the following.

Consider a company 11 that has an Internet application 13 for its customers (i.e. users 10). The users logon to the Internet application by stating username and password. They can sign up for receiving invoices, order confirmations and other types of documents electronically. The company also has knowledge about the e-mail addresses of their customers. In this situation, the provided method can be embodied as follows.

When a user 10 signs up for receiving electronic documents, the user is first authenticated (step 1) by means of the username and password. A user identifier token in the form of a cookie 14, is then stored (step 2) on the users' computer 15. The customer is required to allow cookie storage at this stage.

The company 11 stores information about which cookie is stored with which user. This is typically done through using a relational database. Hence, an association 16' is made between the cookie 14 and the authenticated user 10.

When specific protected information 17 has emerged at the company, which information the user should be allowed to access, e.g. when the company wants to send a document such as an invoice or an order confirmation to a customer, the company stores the information 17 in a database. The company then sends (step 3) an e-mail to the customer 10, with an embedded electronic link to the document (URL). The link comprises an information identifier token in the form of a document code 18 as a parameter. The code is constructed in such a way that it is not possible to derive its content merely from knowledge about the customer 10, the document 17 or the company 11.

The company stores information about which specific document 17 should be available to which user 10, i.e. association 16" is created and stored. The company also stores information about which document code 18 is associated with which specific document 17, i.e. association 16''' is created and stored. This is typically done through the use of a relational database.

When the customer receives the e-mail, the customer can use the link in the e-mail to view the document. The web browser of the client computer thus makes a request (step 4) to the company 11.

It is then verified that the request comprises both a document code 18 and a cookie 14. It is also verified that the document code is associated 16''' with the requested document and that the cookie is associated 16' with the user to which the document should be available, which availability is determined by association 16''. If so, the requesting user gains access to the protected document.

If the request is not found to comply with the above mentioned verification rules, the user is requested to logon to the Internet application and asked if a cookie should be stored on the computer the user is currently using, to enable future access of documents from this computer.

Note that the steps of enabling a user of an Internet application access to protected information in accordance with the present invention need not be performed in the order given in the method defined by the claims. The information identifier token may, for instance, be created before the user identifier token.

Even though the invention has been described with reference to specific exemplifying embodiments thereof, many different alterations, modifications and the like will become apparent for those skilled in the art. The described embodiments are therefore not intended to limit the scope of the invention, as defined by the appended claims.

## Claims

1. A method of enabling a user (10) of an Internet application (13) access to protected information (17), said method comprising the steps of:
creating (2) a user identifier token (14) after having authenticated (1) the user by means of a logon mechanism (12) of the Internet application;
associating (16') said user identifier token with the authenticated user;
storing said user identifier token at an Internet client (15) of said authenticated user, said user identifier token not giving access to said Internet application;
associating (16'') the protected information with said authenticated user;
creating an information identifier token (18), said information identifier token not giving access to said Internet application, neither by itself nor in combination with the user identifier token;
associating (16''') said information identifier token with said protected information;
delivering (3) said information identifier token to said authenticated user via e-mail;
receiving (4) a request from a requesting user to access said protected information; and
verifying that said request comprises a user identifier token and an information identifier token, and that the user identifier token of the request is associated (16') with said authenticated user, that said authenticated user (10) is associated (16") with said requested protected information (17) and that said requested protected information is associated (16''') with the information identifier token of the request, allowing the requesting user to access said protected information.

2. The method according to claim 1, further comprising the step of:
providing the protected information (17) with a digital signature.

3. The method according to claim 1 or 2, further comprising the step of:
creating a hash value for the protected information (17) and giving a requesting user (10) access to the hash value on successful verification.

4. The method according to any one of claims 1-3, further comprising the step of:
encrypting said hash value to provide confidentiality.

5. The method according to any one of the preceding claims, further comprising the step of:
establishing a secure channel for delivery of the protected information (17).

6. The method according to any one of the preceding claims, wherein said information identifier token (18) is delivered (3) through a mail with a web link to the protected information (17).

7. The method according to claim 6, wherein said information identifier token (18) is a code comprised in the web link.

8. The method according to any one of the preceding claims, wherein said request to access protected information (17) is received (4) over the Internet.

9. The method according to claim 6 or 7, wherein the request (4) to access said protected information (17) is made by using said link at the client (15).

10. The method according to any one of the preceding claims, wherein the user identifier token (14) is a cookie.

11. The method according to any one of the preceding claims, wherein the association (16') between said authenticated user (10) and said user identifier token (14) is made effective by an association between a user identifier and a code comprised in said user identifier token.

12. The method according to any one of the preceding claims, wherein the association (16'') between the authenticated user (10) and the protected information (17) is made effective by an association between a user identifier and an identification of an electronic document.

13. The method according to any one of the preceding claims, wherein the association (16''') between the protected information (17) and the information identifier token (18) is made effective by an association between an identification of an electronic document and a code comprised in the information identifier token.

14. The method according to any one of the preceding claims, wherein said associations (16', 16'', 16''') are created by means of using a database.

15. The method according to any one of the preceding claims, wherein the user identifier token (14) is arranged in such a way that its content can not be derived from knowledge about a provider (11) of the protected information or the authenticated user (10).

16. The method according to any one of claims 13 or 14, wherein the information identifier token (18) is arranged in such a way that its content can not be derived from knowledge about a provider (11) of the protected information, the authenticated user (10) or the electronic document (17).

17. The method according to any one of the preceding claims, further comprising the step of:
receiving, from a user of the Internet application (13), a request to receive documents electronically, whereupon the protected information (17) is sent to an authenticated user (10) electronically.

18. The method according to any one of the preceding claims, wherein the step of creating (2) the user identifier token (14) is performed during a session when the authenticated user (10) is logged on to the Internet application (13), and wherein the user identifier token is delivered to the client (15) via the Internet.

19. The method according to any one of the preceding claims, wherein said Internet application (13) is arranged in such a way that said logon mechanism (12) gives the user (10) authorization to use a set of functions during a session with the Internet application.

20. The method according to any one of the preceding claims, wherein the verification of the request (4) from a requesting user further comprising the steps of:
requesting the user to logon (12) to the Internet application (13), if the request is found not to comprise a user identifier token, but it is verified that said requested protected information (17) is associated (16''') with said information identifier token (18); and
creating a user identifier token (14) and storing said token at the Internet client (15) the user is currently using if the Internet application user after logon is verified to be associated with said requested protected information, said user identifier token not giving access to said Internet application, neither by itself nor in combination with said information identifier token.

21. A device for enabling a user (10) of an Internet application (13) to access protected information (17), said device comprising:
means (19) for creating a user identifier token (14) after having authenticated the user by means of a logon mechanism (12) of the Internet application;
means (19) for associating (16') said user identifier token with the authenticated user;
means (19) for delivering said user identifier token to an Internet client (15) of said authenticated user, said user identifier token not giving access to said Internet application;
means (19) for associating (16'') the protected information with said authenticated user;
means (19) for creating an information identifier token (18), said information identifier token not giving access to said Internet application, neither by itself nor in combination with the user identifier token;
means (19) for associating (16''') said information identifier token with said protected information;
means (19) for delivering said information identifier token to said authenticated user via e-mail;
means (19) for receiving a request from a requesting user to access said protected information; and
means (19) for verifying that said request comprises a user identifier token and an information identifier token, and that the user identifier token of the request is associated (16') with said authenticated user, that said authenticated user (10) is associated (16'') with said requested protected information (17) and that said requested protected information is associated (16''') with the information identifier token of the request, allowing the requesting user to access said protected information.

22. The device according to claim 21, further comprising:
means (19) for providing the protected information (17) with a digital signature.

23. The device according to claim 21 or 22, further comprising:
means (19) for creating a hash value for the protected information (17) and giving a requesting user (10) access to the hash value on successful verification.

24. The device according to any one of claims 21-23, further comprising:
means (19) for encrypting said hash value to provide confidentiality.

25. The device according to any one of claims 21-24, further comprising:
means (19) for establishing a secure channel for delivery of the protected information (17).

26. The device according to any one of claims 21-25, wherein the means (19) for delivering said information identifier token (18) is arranged to delivered it via a mail with a web link to the protected information (17).

27. The device according to claim 26, wherein said information identifier token (18) is a code comprised in the web link.

28. The device according to any one of claims 21-27, wherein the means (19) for receiving a request is arranged to receive said request to access protected information (17) over the Internet.

29. The device according to claim 27 or 28, wherein said link is arranged such that the request to access said protected information (17) is made by using said link at the client (15).

30. The device according to any one of claims 21-29, wherein the user identifier token (14) is a cookie.

31. The device according to any one of claims 21-30, wherein the association (16') between said authenticated user (10) and said user identifier token (14) is arranged such that it is made effective by an association between a user identifier and a code comprised in said user identifier token.

32. The device according to any one of claims 21-31, wherein the association (16'') between the authenticated user (10) and the protected information (17) is arranged such that it is made effective made effective by an association between a user identifier and an identification of an electronic document.

33. The device according to any one of claims 21-32, wherein the association (16''') between the protected information (17) and the information identifier token (18) us arranged such that it is made effective by an association between an identification of an electronic document and a code comprised in the information identifier token.

34. The device according to any one of claims 21-33, wherein said associations (16', 16'', 16''') are arranged to be created by means of using a database.

35. The device according to any one of claims 21-34, wherein the user identifier token (14) is arranged in such a way that its content can not be derived from knowledge about a provider (11) of the protected information or the authenticated user (10).

36. The device according to any one of claims 33 or 34, wherein the information identifier token (18) is arranged in such a way that its content can not be derived from knowledge about a provider (11) of the protected information, the authenticated user (10) or the electronic document (17).

37. The device according to any one of claims 21-36, further comprising:
means (19) for receiving, from a user of the Internet application (13), a request to receive documents electronically, whereupon the protected information (17) is sent to an authenticated user (10) electronically.

38. The device according to any one of claims 21-37, wherein the means (19) for creating the user identifier token (14) is arranged to create said user identifier token during a session when the authenticated user (10) is logged on to the Internet application (13), and further arranged to deliver the user identifier token to the client (15) via the Internet.

39. The device according to any one of claims 21-38, wherein said Internet application (13) is arranged in such a way that said logon mechanism (12) gives the user (10) authorization to use a set of functions during a session with the Internet application.

40. The device according to any one of claims 21-39, wherein the means (19) for verifying the request from a requesting user further is arranged:
to request the user to logon (12) to the Internet application (13), if the request is found not to comprise a user identifier token, but it is verified that said requested protected information (17) is associated (16''') with said information identifier token (18); and
to create a user identifier token (14) and storing said token at the Internet client (15) the user is currently using if the Internet application user after logon is verified to be associated with said requested protected information, said user identifier token not giving access to said Internet application, neither by itself nor in combination with said information identifier token.

41. A computer program product comprising computer-executable components for causing a device to perform the steps recited in any one of claims 1-20 when the computer-executable components are run on a processing unit (19) included in the device.

## Patentansprüche

1. Verfahren, um einem Nutzer (10) einer Internet-Anwendung (13) Zugang zu geschützten Informationen (17) zu ermöglichen, wobei das Verfahren folgende Schritte umfasst:
Erzeugen (2) eines Nutzeridentifikator-Tokens (14), nachdem der Nutzer mittels eines Einlog-Mechanismus' (12) der Internet-Anwendung authentifiziert wurde (1);
Zuordnen (16') des Nutzeridentifikator-Tokens an den authentifizierten Nutzer;
Speichern des Nutzeridentifikator-Tokens in einem Internet-Client (15) des authentifizierten Nutzers, wobei der Nutzeridentifikator-Token keinen Zugang zu der Internet-Anwendung gewährt;
Zuordnen (16") der geschützten Informationen an den authentifizierten Nutzer;
Erzeugen eines Informationsidentifikator-Tokens (18), wobei der Informationsidentifikator-Token weder allein noch in Kombination mit dem Nutzeridentifikator-Token Zugang zu der Internet-Anwendung gewährt;
Zuordnen (16''') des Informationsidentifikator-Tokens zu den geschützten Informationen;
Übermitteln (3) des Informationsidentifikator-Tokens an den authentifizierten Nutzer per E-Mail;
Empfangen (4) einer Anforderung von einem anfordernden Nutzer nach Zugang zu den geschützten Informationen; und
Verifizieren, dass die Anforderung einen Nutzeridentifikator-Token und einen Informationsidentifikator-Token umfasst und dass der Nutzeridentifikator-Token der Anforderung dem authentifizierten Nutzer zugeordnet ist (16'), dass der authentifizierte Nutzer (10) den angeforderten geschützten Informationen (17) zugeordnet ist (16") und dass die angeforderten geschützten Informationen dem Informationsidentifikator-Token der Anforderung zugeordnet sind (16"'), womit dem anfordernden Nutzer der Zugang zu den geschützten Informationen gestattet wird.

2. Verfahren nach Anspruch 1, das des Weiteren folgenden Schritt umfasst:
Versehen der geschützten Informationen (17) mit einer digitalen Signatur.

3. Verfahren nach Anspruch 1 oder 2, das des Weiteren folgenden Schritt umfasst:
Erzeugen eines Hash-Wertes für die geschützten Informationen (17) und Erlauben des Zugriffs auf den Hash-Wert durch einen anfordernden Nutzer (10) nach erfolgreicher Verifizierung.

4. Verfahren nach einem der Ansprüche 1-3, das des Weiteren folgenden Schritt umfasst:
Verschlüsseln des Hash-Wertes aus Gründen der Vertraulichkeit.

5. Verfahren nach einem der vorangehenden Ansprüche, das des Weiteren folgenden Schritt umfasst:
Herstellen eines sicheren Kanals zur Übermittlung der geschützten Informationen (17).

6. Verfahren nach einem der vorangehenden Ansprüche, wobei der Informationsidentifikator-Token (18) durch eine Mail mit einem Weblink zu den geschützten Informationen (17) übermittelt wird (3).

7. Verfahren nach Anspruch 6, wobei der Informationsidentifikator-Token (18) ein Code ist, der in dem Weblink enthalten ist.

8. Verfahren nach einem der vorangehenden Ansprüche, wobei die Anforderung nach Zugang zu geschützten Informationen (17) über das Internet empfangen wird (4).

9. Verfahren nach Anspruch 6 oder 7, wobei die Anforderung (4) nach Zugang zu den geschützten Informationen (17) unter Verwendung des Links in dem Client (15) gestellt wird.

10. Verfahren nach einem der vorangehenden Ansprüche, wobei der Nutzeridentifikator-Token (14) ein Cookie ist.

11. Verfahren nach einem der vorangehenden Ansprüche, wobei die Zuordnung (16') zwischen dem authentifizierten Nutzer (10) und dem Nutzeridentifikator-Token (14) durch eine Zuordnung zwischen einem Nutzeridentifikator und einem Code, der in dem Nutzeridentifikator-Token enthalten ist, wirksam gemacht wird.

12. Verfahren nach einem der vorangehenden Ansprüche, wobei die Zuordnung (16") zwischen dem authentifizierten Nutzer (10) und den geschützten Informationen (17) durch eine Zuordnung zwischen einem Nutzeridentifikator und einer Identifikation eines elektronischen Dokuments wirksam gemacht wird.

13. Verfahren nach einem der vorangehenden Ansprüche, wobei die Zuordnung (16''') zwischen den geschützten Informationen (17) und dem Informationsidentifikator-Token (18) durch eine Zuordnung zwischen einer Identifikation eines elektronischen Dokuments und einem Code, der in dem Informationsidentifikator-Token enthalten ist, wirksam gemacht wird.

14. Verfahren nach einem der vorangehenden Ansprüche, wobei die Zuordnungen (16', 16", 16"') unter Verwendung einer Datenbank erzeugt werden.

15. Verfahren nach einem der vorangehenden Ansprüche, wobei der Nutzeridentifikator-Token (14) so konfiguriert ist, dass sein Inhalt nicht aus der Kenntnis eines Anbieters (11) der geschützten Informationen oder des authentifizierten Nutzers (10) abgeleitet werden kann.

16. Verfahren nach einem der Ansprüche 13 oder 14, wobei der Informationsidentifikator-Token (18) so konfiguriert ist, dass sein Inhalt nicht aus der Kenntnis eines Anbieters (11) der geschützten Informationen, des authentifizierten Nutzers (10) oder des elektronischen Dokuments (17) abgeleitet werden kann.

17. Verfahren nach einem der vorangehenden Ansprüche, das des Weiteren folgenden Schritt umfasst:
Empfangen - von einem Nutzer der Internet-Anwendung (13) - einer Anforderung nach Erhalt von Dokumenten auf elektronischem Weg, woraufhin die geschützten Informationen (17) auf elektronischem Weg an einen authentifizierten Nutzer (10) gesendet werden.

18. Verfahren nach einem der vorangehenden Ansprüche, wobei der Schritt des Erzeugens (2) des Nutzeridentifikator-Tokens (14) während einer Sitzung ausgeführt wird, wenn der authentifizierte Nutzer (10) in die Internet-Anwendung (13) eingeloggt ist, und wobei der Nutzeridentifikator-Token über das Internet an den Client (15) übermittelt wird.

19. Verfahren nach einem der vorangehenden Ansprüche, wobei die Internet-Anwendung (13) so konfiguriert ist, dass der Einlog-Mechanismus (12) dem Nutzer (10) die Befugnis erteilt, während einer Sitzung mit der Internet-Anwendung einen Satz Funktionen zu benutzen.

20. Verfahren nach einem der vorangehenden Ansprüche, wobei die Verifizierung der Anforderung (4) von einem anfordernden Nutzer des Weiteren folgende Schritte umfasst:
Auffordern des Nutzers, sich in der Internet-Anwendung (13) einzuloggen (12), wenn festgestellt wird, dass die Anforderung keinen Nutzeridentifikator-Token enthält, sondern verifiziert wird, dass die angeforderten geschützten Informationen (17) dem Informationsidentifikator-Token (18) zugeordnet sind (16'''); und
Erzeugen eines Nutzeridentifikator-Tokens (14) und Speichern des Tokens in dem Internet-Client (15), den der Nutzer momentan nutzt, wenn nach dem Einloggen verifiziert wird, dass der Nutzer der Internet-Anwendung den angeforderten geschützten Informationen zugeordnet ist, wobei der Nutzeridentifikator-Token weder allein noch in Kombination mit dem Informationsidentifikator-Token Zugang zu der Internet-Anwendung gewährt.

21. Vorrichtung, mit der einem Nutzer (10) einer Internet-Anwendung (13) der Zugang zu geschützten Informationen (17) ermöglicht wird, wobei die Vorrichtung Folgendes umfasst:
ein Mittel (19) zum Erzeugen eines Nutzeridentifikator-Tokens (14), nachdem der Nutzer mittels eines Einlog-Mechanismus' (12) der Internet-Anwendung authentifiziert wurde;
ein Mittel (19) zum Zuordnen (16') des Nutzeridentifikator-Tokens zu dem authentifizierten Nutzer;
ein Mittel (19) zum Übermitteln des Nutzeridentifikator-Tokens an einen Internet-Client (15) des authentifizierten Nutzers, wobei der Nutzeridentifikator-Token keinen Zugang zu der Internet-Anwendung gewährt;
ein Mittel (19) zum Zuordnen (16") der geschützten Informationen zu dem authentifizierten Nutzer;
ein Mittel (19) zum Erzeugen eines Informationsidentifikator-Tokens (18), wobei der Informationsidentifikator-Token weder allein noch in Kombination mit dem Nutzeridentifikator-Token Zugang zu der Internet-Anwendung gewährt;
ein Mittel (19) zum Zuordnen (16"') des Informationsidentifikator-Tokens zu den geschützten Informationen;
ein Mittel (19) zum Übermitteln des Informationsidentifikator-Tokens per E-Mail an den authentifizierten Nutzer;
ein Mittel (19) zum Empfangen einer Anforderung von einem anfordernden Nutzer nach Zugang zu den geschützten Informationen; und
ein Mittel (19) zum Verifizieren, dass die Anforderung einen Nutzeridentifikator-Token und einen Informationsidentifikator-Token umfasst und dass der Nutzeridentifikator-Token der Anforderung dem authentifizierten Nutzer zugeordnet ist (16'), dass der authentifizierte Nutzer (10) den angeforderten geschützten Informationen (17) zugeordnet ist (16") und dass die angeforderten geschützten Informationen dem Informationsidentifikator-Token der Anforderung zugeordnet sind (16'''), womit dem anfordernden Nutzer der Zugang zu den geschützten Informationen gestattet wird.

22. Vorrichtung nach Anspruch 21, die des Weiteren Folgendes umfasst:
ein Mittel (19) zum Versehen der geschützten Informationen (17) mit einer digitalen Signatur.

23. Vorrichtung nach Anspruch 21 oder 22, die des Weiteren Folgendes umfasst:
ein Mittel (19) zum Erzeugen eines Hash-Wertes für die geschützten Informationen (17) und zum Ermöglichen des Zugriffs auf den Hash-Wert für den anfordernden Nutzer (10) nach erfolgreicher Verifizierung.

24. Vorrichtung nach einem der Ansprüche 21-23, die des Weiteren Folgendes umfasst:
ein Mittel (19) zum Verschlüsseln des Hash-Wertes aus Gründen der Vertraulichkeit.

25. Vorrichtung nach einem der Ansprüche 21-24, die des Weiteren Folgendes umfasst:
ein Mittel (19) zum Herstellen eines sicheren Kanals zur Übermittlung der geschützten Informationen (17).

26. Vorrichtung nach einem der Ansprüche 21-25, wobei das Mittel (19) zum Übermitteln des Informationsidentifikator-Tokens (18) dafür konfiguriert ist, ihn mittels einer Mail mit einem Weblink zu den geschützten Informationen (17) zu übermitteln.

27. Vorrichtung nach Anspruch 26, wobei der Informationsidentifikator-Token (18) ein Code ist, der in dem Weblink enthalten ist.

28. Vorrichtung nach einem der Ansprüche 21-27, wobei das Mittel (19) zum Empfangen einer Anforderung dafür konfiguriert ist, die Anforderung nach Zugang zu geschützten Informationen (17) über das Internet zu empfangen.

29. Vorrichtung nach Anspruch 27 oder 28, wobei der Link so konfiguriert ist, dass die Anforderung nach Zugang zu den geschützten Informationen (17) unter Verwendung des Link in dem Client (15) gestellt wird.

30. Vorrichtung nach einem der Ansprüche 21-29, wobei der Nutzeridentifikator-Token (14) ein Cookie ist.

31. Vorrichtung nach einem der Ansprüche 21-30, wobei die Zuordnung (16') zwischen dem authentifizierten Nutzer (10) und dem Nutzeridentifikator-Token (14) so konfiguriert ist, dass sie durch eine Zuordnung zwischen einem Nutzeridentifikator und einem Code, der in dem Nutzeridentifikator-Token enthalten ist, wirksam gemacht wird.

32. Vorrichtung nach einem der Ansprüche 21-31, wobei die Zuordnung (16") zwischen dem authentifizierten Nutzer (10) und den geschützten Informationen (17) so konfiguriert ist, dass sie durch eine Zuordnung zwischen einem Nutzeridentifikator und einer Identifikation eines elektronischen Dokuments wirksam gemacht wird.

33. Vorrichtung nach einem der Ansprüche 21-32, wobei die Zuordnung (16''') zwischen den geschützten Informationen (17) und dem Informationsidentifikator-Token (18) so konfiguriert ist, dass sie durch eine Zuordnung zwischen einer Identifikation eines elektronischen Dokuments und einem Code, der in dem Informationsidentifikator-Token enthalten ist, wirksam gemacht wird.

34. Vorrichtung nach einem der Ansprüche 21-33, wobei die Zuordnungen (16', 16", 16"') dafür konfiguriert sind, mittels einer Datenbank erzeugt zu werden.

35. Vorrichtung nach einem der Ansprüche 21-34, wobei der Nutzeridentifikator-Token (14) so konfiguriert ist, dass sein Inhalt nicht aus der Kenntnis eines Anbieters (11) der geschützten Informationen oder des authentifizierten Nutzers (10) abgeleitet werden kann.

36. Vorrichtung nach einem der Ansprüche 33 oder 34, wobei der Informationsidentifikator-Token (18) so konfiguriert ist, dass sein Inhalt nicht aus der Kenntnis eines Anbieters (11) der geschützten Informationen, des authentifizierten Nutzers (10) oder des elektronischen Dokuments (17) abgeleitet werden kann.

37. Vorrichtung nach einem der Ansprüche 21-36, die des Weiteren Folgendes umfasst:
ein Mittel (19) zum Empfangen - von einem Nutzer der Internet-Anwendung (13) - einer Anforderung nach Erhalt von Dokumenten auf elektronischem Weg, woraufhin die geschützten Informationen (17) auf elektronischem Weg an einen authentifizierten Nutzer (10) gesendet werden.

38. Vorrichtung nach einem der Ansprüche 21-37, wobei das Mittel (19) zum Erzeugen des Nutzeridentifikator-Tokens (14) dafür konfiguriert ist, den Nutzeridentifikator-Token während einer Sitzung zu erzeugen, wenn der authentifizierte Nutzer (10) in der Internet-Anwendung (13) eingeloggt ist, und des Weiteren dafür konfiguriert ist, den Nutzeridentifikator-Token über das Internet an den Client (15) zu übermitteln.

39. Vorrichtung nach einem der Ansprüche 21-38, wobei die Internet-Anwendung (13) so konfiguriert ist, dass der Einlog-Mechanismus (12) dem Nutzer (10) die Befugnis erteilt, während einer Sitzung mit der Internet-Anwendung einen Satz Funktionen zu benutzen.

40. Vorrichtung nach einem der Ansprüche 21-39, wobei das Mittel (19) zum Verifizieren der Anforderung von einem anfordernden Nutzer des Weiteren dafür konfiguriert ist:
den Nutzer aufzufordern, sich in der Internet-Anwendung (13) einzuloggen (12), wenn festgestellt wird, dass die Anforderung keinen Nutzeridentifikator-Token enthält, sondern verifiziert wird, dass die angeforderten geschützten Informationen (17) dem Informationsidentifikator-Token (18) zugeordnet sind (16'''); und
einen Nutzeridentifikator-Token (14) zu erzeugen und den Token in dem Internet-Client (15), den der Nutzer momentan nutzt, zu speichern, wenn nach dem Einloggen verifiziert wird, dass der Nutzer der Internet-Anwendung den angeforderten geschützten Informationen zugeordnet ist, wobei der Nutzeridentifikator-Token weder allein noch in Kombination mit dem Informationsidentifikator-Token Zugang zu der Internet-Anwendung gewährt.

41. Computerprogrammprodukt, das durch einen Computer ausführbare Komponenten umfasst, um eine Vorrichtung zu veranlassen, die in einem der Ansprüche 1-20 angeführten Schritte auszuführen, wenn die durch einen Computer ausführbaren Komponenten in einer in der Vorrichtung enthaltenen Verarbeitungseinheit (19) verarbeitet werden.

## Revendications

1. Procédé permettant à un utilisateur (10) d'une application Internet (13) d'accéder à des informations protégées (17), ledit procédé comprenant les étapes consistant à :
créer (2) un jeton d'identification d'utilisateur (14) après avoir authentifié (1) l'utilisateur au moyen d'un mécanisme d'ouverture de session (12) de l'application Internet ;
associer (16') ledit jeton d'identification d'utilisateur à l'utilisateur authentifié ;
mémoriser ledit jeton d'identification d'utilisateur à un client Internet (15) dudit utilisateur authentifié, ledit jeton d'identification d'utilisateur ne donnant pas accès à ladite application Internet ;
associer (16") les informations protégées au dit utilisateur authentifié ;
créer un jeton d'identification d'informations (18), ledit jeton d'identification d'informations ne donnant pas accès à ladite application Internet, ni indépendamment ni en combinaison avec le jeton d'identification d'utilisateur ;
associer (16"') ledit jeton d'identification d'informations aux dites informations protégées ;
livrer (3) ledit jeton d'identification d'informations au dit utilisateur authentifié par e-mail ;
recevoir (4) une demande de la part d'un utilisateur demandeur pour accéder aux dites informations protégées ; et
vérifier que ladite demande comprend un jeton d'identification d'utilisateur et un jeton d'identification d'informations, et que le jeton d'identification d'utilisateur de la demande est associé (16') au dit utilisateur authentifié, que ledit utilisateur authentifié (10) est associé (16") aux dites informations protégées demandées (17) et que lesdites informations protégées demandées sont associées (16"') au jeton d'identification d'informations de la demande, en permettant à l'utilisateur demandeur d'accéder aux dites informations protégées.

2. Procédé selon la revendication 1, comprenant en outre l'étape consistant à :
fournir les informations protégées (17) avec une signature numérique.

3. Procédé selon la revendication 1 ou 2, comprenant en outre l'étape consistant à :
créer une valeur de hachage pour les informations protégées (17) et donner à un utilisateur demandeur (10) l'accès à la valeur de hachage lors de la réussite de la vérification.

4. Procédé selon l'une quelconque des revendications 1 à 3, comprenant en outre l'étape consistant à :
crypter ladite valeur de hachage pour assurer la confidentialité.

5. Procédé selon l'une quelconque des revendications précédentes, comprenant en outre l'étape consistant à :
établir un canal sécurisé pour la livraison des informations protégées (17).

6. Procédé selon l'une quelconque des revendications précédentes, dans lequel ledit jeton d'identification d'informations (18) est livré (3) par e-mail avec un lien Web vers les informations protégées (17).

7. Procédé selon la revendication 6, dans lequel ledit jeton d'identification d'informations (18) est un code compris dans le lien Web.

8. Procédé selon l'une quelconque des revendications précédentes, dans lequel ladite demande d'accès aux informations protégées (17) est reçue (4) sur Internet.

9. Procédé selon la revendication 6 ou 7, dans lequel la demande (4) d'accès aux dites informations protégées (17) est effectuée en utilisant ledit lien au client (15).

10. Procédé selon l'une quelconque des revendications précédentes, dans lequel le jeton d'identification d'utilisateur (14) est un cookie.

11. Procédé selon l'une quelconque des revendications précédentes, dans lequel l'association (16') entre ledit utilisateur authentifié (10) et ledit jeton d'identification d'utilisateur (14) est rendue effective par une association entre un identifiant d'utilisateur et un code compris dans ledit jeton d'identification d'utilisateur.

12. Procédé selon l'une quelconque des revendications précédentes, dans lequel l'association (16") entre l'utilisateur authentifié (10) et les informations protégées (17) est rendue effective par une association entre un identifiant d'utilisateur et une identification d'un document électronique.

13. Procédé selon l'une quelconque des revendications précédentes, dans lequel l'association (16"') entre les informations protégées (17) et le jeton d'identification d'informations (18) est rendue effective par une association entre une identification d'un document électronique et un code compris dans ledit jeton d'identification d'utilisateur.

14. Procédé selon l'une quelconque des revendications précédentes, dans lequel lesdites associations (16', 16", 16"') sont créées au moyen de l'utilisation d'une base de données.

15. Procédé selon l'une quelconque des revendications précédentes, dans lequel le jeton d'identification d'utilisateur (14) est agencé de manière à ce que son contenu ne puisse pas être dérivé de la connaissance d'un fournisseur (11) des informations protégées ou de l'utilisateur authentifié (10).

16. Procédé selon la revendication 13 ou 14, dans lequel le jeton d'identification d'informations (18) est agencé de manière à ce que son contenu ne puisse pas être dérivé de la connaissance d'un fournisseur (11) des informations protégées, de l'utilisateur authentifié (10) ou du document électronique (17).

17. Procédé selon l'une quelconque des revendications précédentes, comprenant en outre l'étape consistant à :
recevoir, d'un utilisateur de l'application Internet (13), une demande pour recevoir des documents électroniquement, sur quoi les informations protégées (17) sont envoyées électroniquement à un utilisateur authentifié (10).

18. Procédé selon l'une quelconque des revendications précédentes, dans lequel l'étape de création (2) du jeton d'identification d'utilisateur (14) est effectuée au cours d'une session lorsque l'utilisateur authentifié (10) est en session avec l'application Internet (13), et dans lequel le jeton d'identification d'utilisateur est livré au client (15) par le biais d'Internet.

19. Procédé selon l'une quelconque des revendications précédentes, dans lequel ladite application Internet (13) est agencée de manière à ce que ledit mécanisme d'ouverture de session (12) donne à l'utilisateur (10) l'autorisation d'utiliser un ensemble de fonctions au cours d'une session avec l'application Internet.

20. Procédé selon l'une quelconque des revendications précédentes, dans lequel la vérification de la demande (4) d'un utilisateur demandeur comprend en outre les étapes consistant à :
demander à l'utilisateur d'ouvrir une session (12) avec l'application Internet (13), s'il est constaté que la demande ne compromet pas un jeton d'identification d'utilisateur, mais il est vérifié que lesdites informations protégées demandées (17) sont associées (16"') au dit jeton d'identification d'informations (18) ; et
créer un jeton d'identification d'utilisateur (14) et mémoriser ledit jeton au client Internet (15) que l'utilisateur est en train d'utiliser s'il est vérifié après l'ouverture de session que l'utilisateur de l'application Internet est associé aux dites informations protégées demandées, ledit jeton d'identification d'utilisateur ne donnant pas accès à ladite application Internet, ni indépendamment ni en combinaison avec ledit jeton d'identification d'informations.

21. Dispositif permettant à un utilisateur (10) d'une application Internet (13) d'accéder à des informations protégées (17), ledit dispositif comprenant :
un moyen (19) pour créer un jeton d'identification d'utilisateur (14) après avoir authentifié l'utilisateur au moyen d'un mécanisme d'ouverture de session (12) de l'application Internet ;
un moyen (19) pour associer (16') ledit jeton d'identification d'utilisateur à l'utilisateur authentifié ;
un moyen (19) pour livrer ledit jeton d'identification d'utilisateur à un client Internet (15) dudit utilisateur authentifié, ledit jeton d'identification d'utilisateur ne donnant pas accès à ladite application Internet ;
un moyen (19) pour associer (16") les informations protégées au dit utilisateur authentifié ;
un moyen (19) pour créer un jeton d'identification d'informations (18), ledit jeton d'identification d'informations ne donnant pas accès à ladite application Internet, ni indépendamment ni en combinaison avec le jeton d'identification d'utilisateur ;
un moyen (19) pour associer (16"') ledit jeton d'identification d'informations aux dites informations protégées ;
un moyen (19) pour livrer ledit jeton d'identification d'informations au dit utilisateur authentifié par e-mail ;
un moyen (19) pour recevoir une demande de la part d'un utilisateur demandeur pour accéder aux dites informations protégées ; et
un moyen (19) pour vérifier que ladite demande comprend un jeton d'identification d'utilisateur et un jeton d'identification d'informations, et que le jeton d'identification d'utilisateur de la demande est associé (16') au dit utilisateur authentifié, que ledit utilisateur authentifié (10) est associé (16") aux dites informations protégées demandées (17) et que lesdites informations protégées demandées sont associées (16"') au jeton d'identification d'informations de la demande, en permettant à l'utilisateur demandeur d'accéder aux dites informations protégées.

22. Dispositif selon la revendication 21, comprenant en outre :
un moyen (19) pour fournir les informations protégées (17) avec une signature numérique.

23. Dispositif selon la revendication 21 ou 22, comprenant en outre :
un moyen (19) pour créer une valeur de hachage pour les informations protégées (17) et donner à un utilisateur demandeur (10) l'accès à la valeur de hachage lors de la réussite de la vérification.

24. Dispositif selon l'une quelconque des revendications 21 à 23, comprenant en outre :
un moyen (19) pour crypter ladite valeur de hachage pour assurer la confidentialité.

25. Dispositif selon l'une quelconque des revendications 21 à 24, comprenant en outre :
un moyen (19) pour établir un canal sécurisé pour la livraison des informations protégées (17).

26. Dispositif selon l'une quelconque des revendications 21 à 25, dans lequel le moyen (19) pour ledit jeton d'identification d'informations (18) est agencé pour le livrer par e-mail avec un lien Web vers les informations protégées (17).

27. Dispositif selon la revendication 26, dans lequel ledit jeton d'identification d'informations (18) est un code compris dans le lien Web.

28. Dispositif selon l'une quelconque des revendications 21 à 27, dans lequel le moyen (19) pour recevoir une demande est agencé pour recevoir ladite demande d'accès aux informations protégées (17) sur Internet.

29. Dispositif selon la revendication 27 ou 28, dans lequel ledit lien est agencé de sorte que la demande d'accès aux dites informations protégées (17) est effectuée en utilisant ledit lien au client (15).

30. Dispositif selon l'une quelconque des revendications 21 à 29, dans lequel le jeton d'identification d'utilisateur (14) est un cookie.

31. Dispositif selon l'une quelconque des revendications 21 à 30, dans lequel l'association (16') entre ledit utilisateur authentifié (10) et ledit jeton d'identification d'utilisateur (14) est agencée de manière à être rendue effective par une association entre un identifiant d'utilisateur et un code compris dans ledit jeton d'identification d'utilisateur.

32. Dispositif selon l'une quelconque des revendications 21 à 31, dans lequel l'association (16") entre l'utilisateur authentifié (10) et les informations protégées (17) est agencée de manière à être rendue effective par une association entre un identifiant d'utilisateur et une identification d'un document électronique.

33. Dispositif selon l'une quelconque des revendications 21 à 32, dans lequel l'association (16"') entre les informations protégées (17) et le jeton d'identification d'informations (18) est agencée de manière à être rendue effective par une association entre une identification d'un document électronique et un code compris dans ledit jeton d'identification d'utilisateur.

34. Dispositif selon l'une quelconque des revendications 21 à 23, dans lequel lesdites associations (16', 16", 16"') sont agencées pour être créées au moyen de l'utilisation d'une base de données.

35. Dispositif selon l'une quelconque des revendications 21 à 34, dans lequel le jeton d'identification d'utilisateur (14) est agencé de manière à ce que son contenu ne puisse pas être dérivé de la connaissance d'un fournisseur (11) des informations protégées ou de l'utilisateur authentifié (10).

36. Dispositif selon la revendication 33 ou 34, dans lequel le jeton d'identification d'informations (18) est agencé de manière à ce que son contenu ne puisse pas être dérivé de la connaissance d'un fournisseur (11) des informations protégées, de l'utilisateur authentifié (10) ou du document électronique (17).

37. Dispositif selon l'une quelconque des revendications 21 à 36, comprenant en outre :
un moyen (19) pour recevoir, d'un utilisateur de l'application Internet (13), une demande pour recevoir des documents électroniquement, sur quoi les informations protégées (17) sont envoyées électroniquement à un utilisateur authentifié (10).

38. Dispositif selon l'une quelconque des revendications 21 à 37, dans lequel le moyen (19) pour créer le jeton d'identification d'utilisateur (14) est agencé pour créer ledit jeton d'identification d'utilisateur au cours d'une session lorsque l'utilisateur authentifié (10) est en session avec l'application Internet (13), et en outre agencé pour livrer le jeton d'identification d'utilisateur au client (15) par le biais d'Internet.

39. Dispositif selon l'une quelconque des revendications 21 à 38, dans lequel ladite application Internet (13) est agencée de manière à ce que ledit mécanisme d'ouverture de session (12) donne à l'utilisateur (10) l'autorisation d'utiliser un ensemble de fonctions au cours d'une session avec l'application Internet.

40. Dispositif selon l'une quelconque des revendications 21 à 39, dans lequel le moyen (19) pour vérifier la demande (4) d'un utilisateur demandeur est agencé pour :
demander à l'utilisateur d'ouvrir une session (12) avec l'application Internet (13), s'il est constaté que la demande ne compromet pas un jeton d'identification d'utilisateur, mais il est vérifié que lesdites informations protégées demandées (17) sont associées (16"') au dit jeton d'identification d'informations (18) ; et
créer un jeton d'identification d'utilisateur (14) et mémoriser ledit jeton au client Internet (15) que l'utilisateur est en train d'utiliser s'il est vérifié après l'ouverture de session que l'utilisateur de l'application Internet est associé aux dites informations protégées demandées, ledit jeton d'identification d'utilisateur ne donnant pas accès à ladite application Internet, ni indépendamment ni en combinaison avec ledit jeton d'identification d'informations.

41. Produit de programme informatique comprenant des composants exécutables par ordinateur pour amener un dispositif à effectuer les étapes selon l'une quelconque des revendications 1 à 20 lorsque les composants exécutables par ordinateur sont exécutés sur une unité de traitement (19) comprise dans le dispositif.
